# EUROPÄISCHE PATENTSCHRIFT

(11) **EP 2 364 903 B1**
(45) Veröffentlichungstag und Bekanntmachung des Hinweises auf die Patenterteilung: **05.10.2016**
(21) Anmeldenummer: 11154923.4
(22) Anmeldetag: 18.02.2011
(51) Int. Cl.: B62K 23/06, F02N 11/10, B60T 7/10

(54) **Verfahren zum Starten des Antriebsmotors eines Fahrzeugs**
Method for starting the drive motor of a vehicle
Procédé de démarrage du moteur d'entraînement d'un véhicule

(30) Priorität: 09.03.2010 DE 102010002690
(43) Veröffentlichungstag der Anmeldung: 14.09.2011
(73) Patentinhaber: Bayerische Motoren Werke Aktiengesellschaft, 80809 München (DE)
(72) Erfinder: Dr.Püffel, Peter, 85354, Freising (DE); Lotti, Massimo, 47900, Rimini (IT)

(56) Entgegenhaltungen:
- EP-A1- 1 783 042
- EP-A2- 1 081 039
- US-B1- 7 669 686

## Beschreibung

Die vorliegende Erfindung betrifft ein Fahrzeug gemäß dem Oberbegriff des Patentanspruches 1.

Ein derartiges Fahrzeug ist aus der EP 1 783 042 A1 bekannt. Zum technischen Hintergrund der vorliegenden Erfindung zählen die EP 1 081 039 A2 sowie die US 7,669,686 B1.

Motorroller sind mit einer Fliehkraftkupplung ausgestattet. Um bei stehendem Fahrzeug ein Wegrollen des Motorrollers zu verhindern, ist üblicherweise eine Feststellbremse, die im Folgenden auch als "Parkbremse" bezeichnet wird, vorgesehen. Die Parkbremsen von Motorrollern können von Hand ein- und ausgelegt werden.

Bei den derzeit auf dem Markt angebotenen Motorrollern kann der Motor gestartet werden, obwohl die Parkbremse eingelegt ist. Da, wie bereits erwähnt, Motorroller üblicherweise mit einer Fliehkraftkupplung ausgestattet sind, bemerkt der Fahrer unter Umständen erst wenn er losfahren möchte, dass die Parkbremse eingelegt ist, was zu Stürzen führen kann.

Aufgabe der Erfindung ist es, ein Fahrzeug, insbesondere ein Motorrad, insbesondere einen Motorroller, mit einem Starterelement und einem Betätigungselement zur Betätigung einer Parkbremse zu schaffen, das eine höhere Bediensicherheit aufweist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Fahrzeug, insbesondere ein Motorrad und insbesondere ein Motorroller mit einem "ersten Bedienelement", das zum Starten eines Antriebsmotors des Fahrzeugs vorgesehen ist und einem zweiten Bedienelement, das zum Betätigen, d.h. zum Ein- und/oder Auslegen einer Parkbremse des Fahrzeugs vorgesehen ist, wobei das zweite Bedienelement eine Parkstellung, in der die Parkbremse eingelegt ist, bzw. eine Fahrstellung, in der die Parkbremse ausgelegt ist, einnehmen kann. Ganz allgemein besteht der Grundgedanke der Erfindung darin, sicherzustellen, dass ein Starten des Antriebsmotors zuverlässig verhindert wird, wenn die Parkbremse eingelegt wird.

Dies könnte auch auf elektronischem Wege erreicht werden. So könnte elektronisch mittels einer Sensorik überwacht werden, ob die Parkbremse eingelegt ist und wenn ein entsprechendes Signal vorliegt, das anzeigt, dass die Parkbremse eingelegt ist, könnte ebenfalls elektronisch ein Starten des Antriebsmotors unterbunden werden.

Der Kern der Erfindung besteht darin, dass das erste Bedienelement nicht betätigbar oder sogar unzugänglich ist, wenn sich das zweite Bedienelement in der Parkstellung befindet. Das Starten, oder genauer gesagt, ein Betätigen des Startelements des Verbrennungsmotors wird also "mechanisch" unterbunden, in dem in der Parkstellung des zweiten Bedienelements das erste Bedienelement nicht betätigbar und/oder überhaupt nicht zugänglich ist. Wie bereits erwähnt, könnte dies alternativ auch elektronisch erreicht werden. Denkbar ist, auch, dass das elektronische System als redundantes System vorgesehen ist.

Nach einer Weiterbildung der Erfindung ist das erste Bedienelement durch das zweite Bedienelement, das schwenkbar angeordnet sein kann, abgedeckt bzw. verdeckt, wenn sich das zweite Bedienelement in der Parkstellung befindet.

Sowohl das erste Bedienelement als auch das zweite Bedienelement können jeweils an einem Lenker des Fahrzeugs insbesondere in einem Griffbereich des Lenkers angeordnet sein. Vorzugsweise sind beide Bedienelemente im Bereich ein- und desselben Griffs des Lenkers angeordnet. Vorzugsweise sind beide Bedienelemente im Bereich des - in Fahrtrichtung des Fahrzeugs gesehenen - rechten Lenkergriffs angeordnet. Insbesondere können beide Bedienelemente auf derjenigen Lenkerseite angeordnet sein, auf der ein Gasdrehgriff des Fahrzeugs angeordnet ist.

Bei dem ersten Bedienelement kann es sich z. B. einen Drucktaster oder um einen Kippschalter, insbesondere auch um einen in zwei Richtungen kippbaren Schalter handeln. Es kann vorgesehen sein, dass durch Betätigen in der einen Richtung der Antriebsmotor gestartet und durch Betätigen in der anderen Richtung der Antriebsmotor ausgeschaltet wird.

Das zweite Bedienelement ist schwenkbar bzw. drehbar angeordnet. Die Schwenk- bzw. Drehachse des zweiten Bedienelements ist durch eine Längsachse eines Griffstücks des Lenkers gebildet.

Nach einer Weiterbildung der Erfindung ist vorgesehen, dass das zweite Bedienelement über einen Seil- oder Bowdenzug mit einer Parkbremseinrichtung gekoppelt ist. Zum Einlegen der Parkbremse ist eine Zugkraft erforderlich, die mechanisch über das zweite Bedienelement und den Seil- oder Bowdenzug in die Parkbremseinrichtung eingeleitet wird.

Das zweite Bedienelement kann mittels einer Feder in Richtung der Fahrstellung vorgespannt sein. Zum Einlegen der Parkbremse muss das zweite Bedienelement entgegen der von der Feder ausgeübten Kraft in die Parkstellung bewegt werden.

Nach einer Weiterbildung der Erfindung ist eine Sperreinrichtung vorgesehen, welche ein selbsttätiges, d.h. unbeabsichtigtes Zurückbewegen des zweiten Bedienelements in die Fahrstellung verhindert, sobald die Parkstellung erreicht wird. Die Sperreinrichtung kann von Hand gelöst werden. Im Falle eines Lösens der Sperreinrichtung wird das zweite Bedienelement durch die Feder "automatisch" in die Fahrstellung, in der ein Starten des Antriebsmotors des Fahrzeugs möglich ist, zurückbewegt.

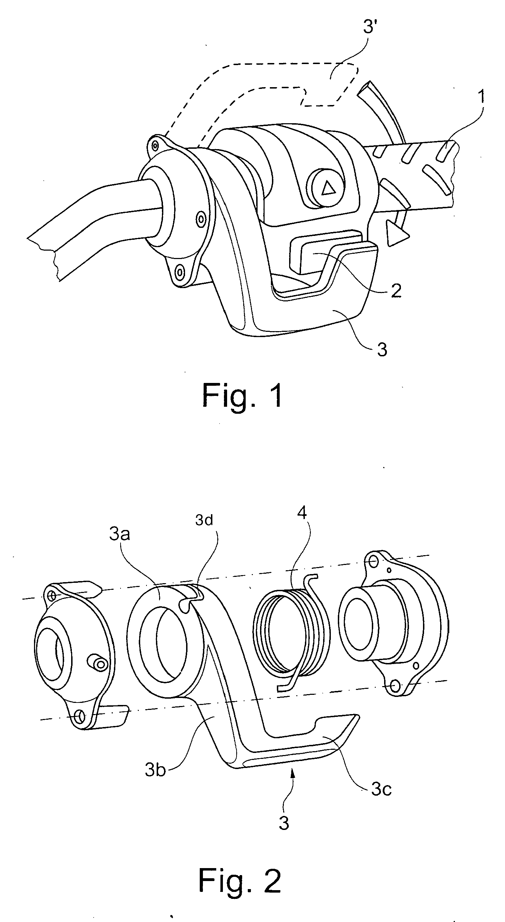

Im Folgenden wird die Erfindung im Zusammenhang mit der Zeichnung näher erläutert. Die Figuren 1 und 2 zeigen das Grundprinzip der Erfindung in schematischer Darstellung.

Figur 1 zeigt einen Ausschnitt eines Lenkers eines Motorrads bzw. eines Motorrollers im Bereich des - in Fahrtrichtung gesehen - rechten Griffstücks 1, welches hier als Gasdrehgriff ausgebildet ist. Im Bereich des Gasdrehgriffs oder, genauer gesagt, zwischen der Lenkermitte und dem Gasdrehgriff ist ein erstes Bedienelement 2 und ein zweites Bedienelement 3 vorgesehen. Das erste Bedienelement ist hier als Drucktaster oder als Kippschalter ausgebildet und zum Starten eines hier nicht näher dargestellten Antriebsmotors des Motorrads bzw. Motorrollers vorgesehen.

Das zweite Bedienelement ist zum Betätigen einer Parkbremse des Motorrads bzw. Motorrollers vorgesehen. In der in Figur 1 gezeigten Stellung des zweiten Bedienelements 3 ist die Parkbremse eingelegt. In einer gestrichelt dargestellten Stellung 3' des zweiten Bedienelements ist die Parkbremse ausgelegt. Das zweite Bedienelement 3 kann zwischen der Parkstellung und der "Fahrstellung" hin und her verschwenkt werden. Die Schwenkachse des zweiten Bedienelements, ist, wie aus Figur 1 ersichtlich ist, im Wesentlichen durch die Mittellängsachse des Gasdrehgriffs 1 des Lenkers gebildet.

Wie aus Figur 1 ersichtlich ist, ist das erste Bedienelement 2 nicht betätigbar bzw. unzugänglich, wenn sich das zweite Bedienelement 3 in der Parkstellung befindet. Das erste Bedienelement 2 ist, wenn sich das zweite Bedienelement 3 in der Parkstellung befindet, durch das zweite Bedienelement 3 verdeckt bzw. abgedeckt und somit nicht zugänglich bzw. nicht betätigbar. Dadurch wird in einfacher mechanischer Weise und sehr zuverlässig verhindert, dass bei eingelegter Parkbremse der Antriebsmotor des Fahrzeugs gestartet wird.

Figur 2 zeigt eine Explosionszeichnung der wesentlichen Komponenten der in Figur 1 gezeigten Anordnung. Wie aus Figur 2 ersichtlich ist, weist das zweite Bedienelement ein zylindrisches Lagerteil 3a und einen einstückig damit verbundenen L-förmig ausgebildeten Hebelarm 3b, 3c auf, wobei der dem Lagerstück 3a angewandte Schenkel 3c des Hebelarms 3b, 3c dazu vorgesehen ist, in der Parkstellung das erste Bedienelement 2 abzudecken bzw. zu verdecken.

Ferner ersichtlich ist eine im Lagerabschnitt 3a vorgesehene, nutartige Vertiefung 3d, die zur Aufnahme eines Endes eines Seilzugseils bzw. eines Bowdenzugseils vorgesehen ist. Über das Seil (nicht dargestellt) ist das zweite Bedienelement mechanisch mit einer Parkbremseinrichtung (nicht dargestellt) verbunden. Wird das zweite Bedienelement von der Fahrstellung 3' in die Parkstellung 3 nach unten verschwenkt, so wird eine Zugkraft auf das Seil (nicht dargestellt) ausgeübt und auf die Parkbremseinrichtung übertragen, wodurch die Parkbremse eingelegt wird.

Die Parkbremseinrichtung, kann durch eine Hinterradbremse des Fahrzeugs gebildet sein, wobei vorgesehen sein kann, dass die Hinterradbremse im Betrieb des Fahrzeugs über die übliche Bremshydraulik und bei stehendem Fahrzeug zum "Einlegen der Parkbremse" alternativ dazu mechanisch über den bereits erwähnten Seil- bzw. Bowdenzug betätigbar, d.h. schließbar ist.

Alternativ dazu kann die Parkbremseinrichtung auch als separate Bremse (z.B. Trommel- oder Scheibenbremse) ausgebildet sein, mittels der bei abgestelltem Fahrzeug das Hinterrad festgestellt werden kann.

Die Parkbremseinrichtung kann auch durch einen Feststell- bzw. Sperrmechanismus gebildet sein, der mit einem Zahnrad oder einem Getriebeelement zusammenwirkt, derart dass das Zahnrad bzw. das Getriebeelement bei eingelegter Parkbremse blockiert bzw. gesperrt ist.

Die in Figur 1 gezeigte Anordnung weist, wie aus Figur 2 ersichtlich ist, ferner eine Drehfeder 4 auf. Die Drehfeder spannt das zweite Bedienelement in Richtung der Fahrstellung 3' (vgl. Figur 1) vor. Zum Einlegen der Parkbremse muss das zweite Bedienelement 3 von der Fahrstellung 3' in die in Figur 1 gezeigte Parkstellung nach unten verschwenkt werden und zwar entgegen der von der Drehfeder 4 ausgeübten Vorspannkraft. Sobald die Parkstellung erreicht wird, rastet ein hier nicht näher dargestellter Rastmechanismus ein, welcher verhindert, dass sich das zweite Bedienelement selbsttätig wieder in Richtung der Fahrstellung 3' zurückbewegt.

Der Rastmechanismus bzw. die Sperreinrichtung kann von Hand gelöst werden. Sobald der Rastmechanismus bzw. die Sperreinrichtung gelöst ist, wird das zweite Bedienelement 3 durch die Drehfeder "automatisch" wieder in die Fahrstellung 3' zurückbewegt, was einhergeht mit einem Lösen der Parkbremse.

## Patentansprüche

1. Fahrzeug, insbesondere Motorrad, insbesondere Motorrollers, mit
- einem ersten Bedienelement (2), das zum Starten eines Antriebsmotors des Fahrzeugs vorgesehen ist, und
- einem zweiten Bedienelement (3), das zum Betätigen einer Parkbremse des Fahrzeugs vorgesehen ist, wobei das zweite Bedienelement (3) eine Parkstellung, in der die Parkbremse eingelegt, bzw. eine Fahrstellung, in der die Parkbremse ausgelegt ist, einnehmen kann, wobei das erste Bedienelement (2) nicht betätigbar bzw. unzugänglich ist, wenn sich das zweite Bedienelement (3) in der Parkstellung befindet **dadurch gekennzeichnet, dass**
das zweite Bedienelement (3) schwenkbar in Bezug auf eine Längsachse eines Griffstücks (1) des Lenkers angeordnet ist.

2. Fahrzeug nach Anspruch 1, **dadurch gekennzeichnet, dass** das erste Bedienelement (2) durch das zweite Bedienelement (3) abgedeckt bzw. verdeckt ist, wenn sich das zweite Bedienelement (3) in der Parkstellung befindet.

3. Fahrzeug nach einem der Ansprüche 1 oder 2, **dadurch gekennzeichnet, dass** das zweite Bedienelement (3) schwenkbar angeordnet ist.

4. Fahrzeug nach einem der Ansprüche 1 bis 3, **dadurch gekennzeichnet, dass** das erste Bedienelement (2) an einem Lenker des Fahrzeugs angeordnet ist.

5. Fahrzeug nach einem der Ansprüche 1 bis 4, **dadurch gekennzeichnet, dass** das zweite Bedienelement (3) an einem Lenker des Fahrzeugs angeordnet ist.

6. Fahrzeug nach einem der Ansprüche 1 bis 5, **dadurch gekennzeichnet, dass** das erste Bedienelement (2) ein Drucktaster bzw. ein Kippschalter ist.

7. Fahrzeug nach einem der Ansprüche 1 bis 6, **dadurch gekennzeichnet, dass** das erste und das zweite Bedienelement (2, 3) im Bereich eines in Fahrtrichtung gesehen rechten Griffstücks (1) des Lenkers angeordnet ist.

8. Fahrzeug nach einem der Ansprüche 1 bis 7, **dadurch gekennzeichnet, dass** das zweite Bedienelement (3) über einen Seil- bzw. Bowdenzug mit einer Parkbremseinrichtung gekoppelt ist.

9. Fahrzeug nach einem der Ansprüche 1 bis 8, **dadurch gekennzeichnet, dass** eine Feder (4) vorgesehen ist, welche das zweite Bedienelement (3) in Richtung der Fahrstellung (3') vorspannt, wobei das zweite Bedienelement (3) von Hand entgegen der Federvorspannung in die Parkstellung bewegbar ist.

10. Fahrzeug nach einem der Ansprüche 1 bis 9, **dadurch gekennzeichnet, dass** eine Sperreinrichtung vorgesehen ist, welche ein selbsttätiges Zurückbewegen des zweiten Bedienelements (3) von der Parkstellung in die Fahrstellung (3')verhindert, sobald die Parkstellung erreicht ist.

11. Fahrzeug nach Anspruch 10, **dadurch gekennzeichnet, dass** die Sperreinrichtung von Hand lösbar ist.

12. Fahrzeug nach einem der vorangehenden Ansprüche, **dadurch gekennzeichnet, dass** die Parkbremseinrichtung durch eine Hinterradbremse gebildet ist, die als Betriebsbremse hydraulisch und als Parkbremse bei stehendem Fahrzeug über den Seil- bzw. Bowdenzug betätigbar ist.

13. Fahrzeug nach einem der vorangehenden Ansprüche, **dadurch gekennzeichnet, dass** im Bereich des Hinterrads des Fahrzeugs eine separate, ausschließlich als Parkbremseinrichtung fungierende Bremseinrichtung vorgesehen ist.

14. Fahrzeug nach einem der vorangehenden Ansprüche, **dadurch gekennzeichnet, dass** die Parkbremseinrichtung durch einen Feststell- bzw. Sperrmechanismus gebildet ist, der mit einem Zahnrad oder einem Getriebeelement zusammenwirkt und dieses bei eingelegter Parkbremse blockiert bzw. sperrt.

## Claims

1. A vehicle, especially a motorbike, especially a motor scooter, having
- a first operating element (2) which is provided to start a drive motor of the vehicle, and
- a second operating element (3) which is provided to actuate a parking brake of the vehicle, wherein the second operating element (3) can occupy a park position in which the parking brake is engaged or a drive position in which the parking brake is disengaged, wherein the first operating element (2) cannot be actuated or is inaccessible when the second operating element (3) is in the park position,
**characterised in that**
the second operating element (3) is arranged swivelably in respect of a longitudinal axis of a handle piece (1) of the handlebar.

2. A vehicle according to claim 1, **characterised in that** the first operating element (2) is covered or hidden by the second operating element (3) when the second operating element (3) is in the park position.

3. A vehicle according to either claim 1 or claim 2, **characterised in that** the second operating element (3) is arranged swivelably.

4. A vehicle according to any one of claims 1 to 3, **characterised in that** the first operating element (2) is arranged on a handlebar of the vehicle.

5. A vehicle according to any one of claims 1 to 4, **characterised in that** the second operating element (3) is arranged on a handlebar of the vehicle.

6. A vehicle according to any one of claims 1 to 5, **characterised in that** the first operating element (2) is a push button or a toggle switch.

7. A vehicle according to any one of claims 1 to 6, **characterised in that** the first and the second operating elements (2, 3) are arranged in the region of a right-hand handle piece (1) of the handlebar, seen in the direction of travel.

8. A vehicle according to any one of claims 1 to 7, **characterised in that** the second operating element (3) is coupled to a parking brake device by a cable pull or by a Bowden cable.

9. A vehicle according to any one of claims 1 to 8, **characterised in that** a spring (4) is provided which pretensions the second operating element (3) in the direction of the drive position (3'), the second operating element (3) being manually movable against the spring pretension into the park position.

10. A vehicle according to any one of claims 1 to 9, **characterised in that** a blocking device is provided which prevents an automatic backwards movement of the second operating element (3) from the park position into the drive position (3') as soon as the park position has been reached.

11. A vehicle according to claim 10, **characterised in that** the blocking device can be released manually.

12. A vehicle according to any one of the preceding claims, **characterised in that** the parking brake device is formed by a rear wheel brake which, as the service brake, can be actuated hydraulically and as the parking brake, can be actuated by the cable pull or by the Bowden cable when the vehicle is stationary.

13. A vehicle according to any one of the preceding claims, **characterised in that** a separate braking device, acting exclusively as a parking brake device, is provided in the region of the rear wheel of the vehicle.

14. A vehicle according to any one of the preceding claims, **characterised in that** the parking brake device is formed by a locking or blocking mechanism which cooperates with a gear wheel or a transmission element and blocks or locks said gear wheel or transmission element when the parking brake is engaged.

## Revendications

1. Véhicule, en particulier motocyclette, en particulier scooter comprenant :
- un premier élément de manoeuvre (2) prévu pour permettre de démarrer le moteur d'entraînement du véhicule, et
- un second élément de manoeuvre (3) prévu pour permettre d'actionner le frein de stationnement du véhicule, le second élément de manoeuvre (3) pouvant prendre une position de stationnement dans laquelle le frein de stationnement est enclenché ou une position de déplacement dans laquelle le frein de stationnement est déconnecté, le premier élément de manoeuvre (2) ne pouvant pas être actionné ou étant inaccessible lorsque le second élément de manoeuvre (3) se trouve dans la position de stationnement,
**caractérisé en ce que**
le second élément de manoeuvre (3) est monté pivotant par rapport à l'axe longitudinal d'une poignée (1) du guidon.

2. Véhicule conforme à la revendication 1,
**caractérisé en ce que**
le premier élément de manoeuvre (2) est couvert ou recouvert par le second élément de manoeuvre (3) lorsque le second élément de manoeuvre (3) se trouve dans la position de stationnement.

3. Véhicule conforme à l'une des revendications 1 et 2,
**caractérisé en ce que**
le second élément de manoeuvre (3) est pivotant.

4. Véhicule conforme à l'une des revendications 1 à 3,
**caractérisé en ce que**
le premier élément de manoeuvre (2) est monté sur le guidon du véhicule.

5. Véhicule conforme à l'une des revendications 1 à 4,
**caractérisé en ce que**
le second élément de manoeuvre (3) est monté sur le guidon du véhicule.

6. Véhicule conforme à l'une des revendications 1 à 5,
**caractérisé en ce que**
le premier élément de manoeuvre (2) est un interrupteur à poussoir ou un interrupteur basculant.

7. Véhicule conforme à l'une des revendications 1 à 6,
**caractérisé en ce que**
le premier et le second éléments de manoeuvre (2, 3) sont montés dans la zone de la poignée droite (1) du guidon considérée dans la direction de déplacement.

8. Véhicule conforme à l'une des revendications 1 à 7,
**caractérisé en ce que**
le second élément de manoeuvre (3) est couplé à un dispositif de frein de stationnement par l'intermédiaire d'un câble de transmission ou d'un câble Bowden.

9. Véhicule conforme à l'une des revendications 1 à 8,
**caractérisé en ce qu'**
il est prévu un ressort (4) qui rappelle le second élément de manoeuvre (3) dans la direction de la position de déplacement (3'), le second élément de manoeuvre (3) pouvant être déplacé manuellement dans la position de stationnement contre la force du ressort.

10. Véhicule conforme à l'une des revendications 1 à 9,
**caractérisé en ce qu'**
il est prévu un dispositif de blocage qui empêche un retour automatique du second élément de manoeuvre (3) de la position de stationnement dans la position de déplacement (3') dès que la position de stationnement a été atteinte.

11. Véhicule conforme à la revendication 10,
**caractérisé en ce que**
le dispositif de blocage peut être relâché manuellement.

12. Véhicule conforme à l'une des revendications précédentes,
**caractérisé en ce que**
le dispositif de frein de stationnement est formé par un frein de roue arrière qui peut être actionné hydrauliquement en tant que frein de fonctionnement et en tant que frein de stationnement lorsque le véhicule est à l'arrêt par l'intermédiaire du câble de transmission ou du câble Bowden.

13. Véhicule conforme à l'une des revendications précédentes,
**caractérisé en ce qu'**
il est prévu dans la zone de la roue arrière du véhicule un dispositif de freinage séparé fonctionnant exclusivement en tant que dispositif de frein de stationnement.

14. Véhicule conforme à l'une des revendications précédentes,
**caractérisé en ce que**
le dispositif de frein de stationnement est formé par un mécanisme de fixation ou de blocage qui coopère avec un pignon ou un élément de transmission et bloque ou verrouille celui-ci lorsque le frein de stationnement est enclenché.
